# EUROPEAN PATENT APPLICATION

(11) **EP 4 610 300 A1**
(43) Date of publication of application: **03.09.2025**
(21) Application number: 23911542.1
(22) Date of filing: 01.12.2023
(51) Int. Cl.: C08J 9/16

(54) **EXPANDED PARTICLES OF POLYPROPYLENE-BASED RESIN, METHOD FOR PRODUCING SAME, AND MOLDED OBJECT FORMED FROM EXPANDED PARTICLES OF POLYPROPYLENE-BASED RESIN**

(30) Priority: 27.12.2022 JP 2022209939
(71) Applicant: JSP Corporation, Tokyo 100-0005 (JP)
(72) Inventor: ITO Yosuke, Yokkaichi-shi, Mie 510-0881 (JP); CHIBA Takuya, Yokkaichi-shi, Mie 510-0881 (JP)
(74) Representative: Kramer Barske Schmidtchen Patentanwälte PartG mbB
(86) International application number: PCT/JP2023/043154
(87) International publication number: WO 2024/142761

(57) **Abstract**

A polypropylene-based resin expanded bead contains an inorganic phosphinate and a melamine-based flame retardant. In the expanded bead, a blending amount of the inorganic phosphinate is 0.5 mass% or more, a blending amount of the melamine-based flame retardant is 0.05 mass% or more, and a sum of the blending amount of the inorganic phosphinate and a blending amount of the melamine-based flame retardant is 5 mass% or less. The expanded bead further contains a first antioxidant composed of a phenolic antioxidant and a second antioxidant composed of a phosphorus-based antioxidant and/or a sulfur-based antioxidant. A sum of a blending amount of the first antioxidant and a blending amount of the second antioxidant in the expanded bead is 0.05 to 0.6 mass%, and a ratio of the blending amount of the second antioxidant to the blending amount of the first antioxidant is 0.5 to 10.

## Description

### TECHNICAL FIELD

The present invention relates to a polypropylene-based resin expanded bead, a method for producing the same, and a molded article of polypropylene-based resin expanded beads.

### BACKGROUND ART

A molded article of polypropylene-based resin expanded beads is lightweight and excellent in cushioning property, rigidity and the like, and thus is used for various applications such as packaging materials, containers, and cushioning materials. For the purpose of enhancing flame retardancy, an inorganic phosphinate and a melamine-based flame retardant may be added to polypropylene-based resin expanded beads for constituting the molded article of polypropylene-based resin expanded beads, (for example, Patent Literature 1).

### PRIOR ART LITERATURE

### Patent Literature

Patent Literature 1: WO 2022/039076 A1

### SUMMARY OF INVENTION

### PROBLEMS TO BE SOLVED BY INVENTION

In the expanded beads of Patent Literature 1, it is necessary to add a relatively large amount of flame retardant in order to obtain desired flame retardancy, which results in deterioration of in-mold moldability. On the other hand, when the amount of the flame retardant added is reduced in order to improve the in-mold moldability, there is a problem that it is difficult to obtain desired flame retardancy.

The present invention has been made in view of such a background, and an object thereof is to provide polypropylene-based resin expanded beads capable of achieving both excellent flame retardancy and excellent in-mold moldability, and a method for producing the same. In addition, an object of the present invention is to provide a molded article of polypropylene-based resin expanded beads capable of achieving both excellent flame retardancy and excellent compression properties.

### MEANS FOR SOLVING PROBLEM

One aspect of the present invention is the polypropylene-based resin expanded bead according to [1] to [5] below.
[1] A polypropylene-based resin expanded bead containing an inorganic phosphinate and a melamine-based flame retardant, in which
   a blending amount of the inorganic phosphinate in the expanded bead is 0.5 mass% or more;
   a blending amount of the melamine-based flame retardant in the expanded bead is 0.05 mass% or more;
   a sum of the blending amount of the inorganic phosphinate and the blending amount of the melamine-based flame retardant in the expanded bead is 5 mass% or less;
   the expanded bead further contains a first antioxidant composed of a phenolic antioxidant and a second antioxidant composed of a phosphorus-based antioxidant and/or a sulfur-based antioxidant;
   a sum of a blending amount of the first antioxidant and a blending amount of the second antioxidant in the expanded bead is 0.05 mass% or more and 0.6 mass% or less; and
   a ratio of the blending amount of the second antioxidant to the blending amount of the first antioxidant in the expanded bead is 0.5 or more and 10 or less.
[2] The polypropylene-based resin expanded bead according to 1], in which the blending amount of the inorganic phosphinate in the expanded bead is 0.5 mass% or more and 1.5 mass% or less.
[3] The polypropylene-based resin expanded bead according to [1] or [2], in which a ratio of the blending amount of the inorganic phosphinate to the blending amount of the melamine-based flame retardant in the expanded bead is 0.05 or more and 10 or less.
[4] The polypropylene-based resin expanded bead according to any one of [1] to [3], in which a ratio of the sum of the blending amount of the first antioxidant and the blending amount of the second antioxidant to the blending amount of the inorganic phosphinate in the expanded bead is 0.05 or more and 0.5 or less.
[5] The polypropylene-based resin expanded bead according to any one of [1] to [4], in which the expanded beads have a bulk density of 20 kg/m³ or more and 90 kg/m³ or less.
   Another aspect of the present invention is a molded article of polypropylene-based resin expanded beads according to [6] below.
[6] A molded article of polypropylene-based resin expanded beads obtained by in-mold molding of the polypropylene-based resin expanded beads according to any one of [1] to [5].
   Still another aspect of the present invention is a method for producing polypropylene-based resin expanded beads according to [7] below.
[7] A method for producing polypropylene-based resin expanded beads in which polypropylene-based resin expanded beads are obtained by foaming polypropylene-based resin particles, in which
   the resin particles contain an inorganic phosphinate, a melamine-based flame retardant, a first antioxidant composed of a phenolic antioxidant, and a second antioxidant composed of a phosphorus-based antioxidant and/or a sulfur-based antioxidant;
   a blending amount of the inorganic phosphinate in the resin particles is 0.5 mass% or more;
   a blending amount of the melamine-based flame retardant in the resin particles is 0.05 mass% or more;
   a sum of the blending amount of the inorganic phosphinate and the blending amount of the melamine-based flame retardant in the resin particles is 5 mass% or less;
   a sum of a blending amount of the first antioxidant and a blending amount of the second antioxidant in the resin particles is 0.05 mass% or more and 0.6 mass% or less; and
   a ratio of the blending amount of the second antioxidant to the blending amount of the first antioxidant in the resin particles is 0.5 or more and 10 or less.

### EFFECTS OF INVENTION

According to the above aspect, it is possible to provide a polypropylene-based resin expanded bead capable of achieving both excellent flame retardancy and excellent in-mold moldability, and a method for producing the same. Further, according to the above aspect, it is possible to provide a molded article of polypropylene-based resin expanded beads capable of achieving both excellent flame retardancy and excellent compression properties.

### BRIEF DESCRIPTION OF DRAWINGS

[FIG.1]

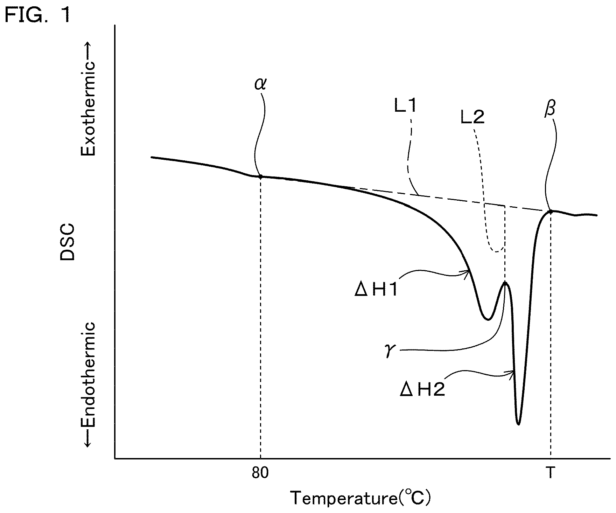

Fig. 1 is an explanatory view showing an example of a DSC curve of expanded beads.

### MODE FOR CARRYING OUT INVENTION

### (Polypropylene-Based Resin Expanded Beads)

### [Polypropylene-Based Resin]

The polypropylene-based resin expanded beads (hereinafter, referred to as "expanded beads".) are composed of a polypropylene-based resin. In the present specification, the polypropylene-based resin refers to a homopolymer of a propylene monomer and a propylene-based copolymer containing 50 mass% or more of structural units derived from propylene. Preferable examples of the propylene-based copolymer include copolymers of propylene and an α-olefin having 4 to 10 carbon atoms, such as an ethylene-propylene copolymer, a butene-propylene copolymer, a hexene-propylene copolymer, and an ethylene-propylene-butene copolymer. These copolymers may be, for example, random copolymers or block copolymers, and are preferably random copolymers. Also, the expanded beads may be composed of one polypropylene-based resin or two or more polypropylene-based resins.

A melting point of the polypropylene-based resin constituting the expanded beads is preferably 125°C or higher and 160°C or lower, more preferably 125°C or higher and 155°C or lower, still more preferably 130°C or higher and 150°C or lower, and particularly preferably 135°C or higher and 145°C or lower. In this case, good in-mold moldability of the expanded beads and good compression properties of a molded article of polypropylene-based resin expanded beads (hereinafter, referred to as "molded article of expanded beads" or "molded article".) obtained by in-mold molding of the expanded beads can be exhibited in a well-balanced manner.

The melting point of the polypropylene-based resin constituting the expanded beads is measured according to JIS K 7121:2012. Specifically, a test piece made of expanded beads is prepared, and the test piece is conditioned in accordance with "(2) When measuring melting temperature after definite heat treatment" of "3. Conditioning of test piece" in JIS K 7121:2012. The conditioning is performed under the condition of a nitrogen inflow amount of 30 mL/min. In the conditioning, the test piece is heated from 23°C to 200°C at a heating rate of 10°C/min and then cooled to 23°C at a cooling rate of 10°C/min after the temperature of 200°C is maintained for 10 minutes. After conditioning the test piece in this manner, the test piece is heated again to 200°C at a heating rate of 10°C/min to obtain a DSC curve. The vertex temperature of a melting peak appearing in the DSC curve obtained as described above is defined as the melting point of the polypropylene-based resin constituting the expanded beads. When a plurality of melting peaks appear in the DSC curve, the vertex temperature of a melting peak having the highest melting peak height based on the baseline is defined as the melting point of the polypropylene-based resin constituting the expanded beads.

### [Inorganic Phosphinate]

The expanded beads contain an inorganic phosphinate. In the present specification, the inorganic phosphinate refers to a salt of a phosphinic acid and a metal represented by a chemical formula of M(H₂PO₂)ₘ (wherein M is a metal element, and m is an integer of 1 or more and 3 or less). The inorganic phosphinate contained in the expanded beads is preferably one or more salts selected from the group consisting of sodium phosphinate (Na(H₂PO₂)), magnesium phosphinate (Mg(H₂PO₂)₂), aluminum phosphinate (Al(H₂PO₃)₃), calcium phosphinate (Ca(H₂PO₂)₂), and zinc phosphinate (Zn(H₂PO₂)₂), more preferably aluminum phosphinate and/or calcium phosphinate, and still more preferably aluminum phosphinate.

A blending amount (A) of the inorganic phosphinate in the expanded beads is 0.5 mass% or more. By setting the blending amount (A) of the inorganic phosphinate in the expanded beads to 0.5 mass% or more, flame retardancy of the molded article can be easily enhanced. From such a viewpoint, the blending amount (A) of the inorganic phosphinate is preferably 0.6 mass% or more, and more preferably 0.8 mass% or more. When the blending amount (A) of the inorganic phosphinate is too small, the flame retardancy of the molded article may be deteriorated.

On the other hand, when a total (A) + (B) of the blending amount (A) of the inorganic phosphinate and a blending amount (B) of the melamine-based flame retardant in the expanded beads is excessively large, moldability during in-mold molding may be deteriorated. By setting the blending amount (A) of the inorganic phosphinate to be within a range in which the total (A) + (B) of the blending amount (A) of the inorganic phosphinate and the blending amount (B) of the melamine-based flame retardant is 5 mass% or less, the flame retardancy of the molded article can be improved while avoiding deterioration of moldability. From the viewpoint of more reliably avoiding deterioration of moldability, the total (A) + (B) of the blending amount (A) of the inorganic phosphinate and the blending amount (B) of the melamine-based flame retardant is preferably 3 mass% or less, and more preferably 1.5 mass% or less.

In addition, from the viewpoint of more easily improving the moldability of the expanded beads, the blending amount (A) of the inorganic phosphinate in the expanded beads is preferably 4 mass% or less, more preferably 3 mass% or less, still more preferably 2 mass% or less, particularly preferably 1.5 mass% or less, and most preferably 1.3 mass% or less.

In constituting the preferred range of the blending amount (A) of the inorganic phosphinate in the expanded beads, the upper limit and the lower limit of the blending amount (A) of the inorganic phosphinate described above can be arbitrarily combined. For example, the preferred range of the blending amount (A) of the inorganic phosphinate may be 0.5 mass% or more and 4 mass% or less, 0.5 mass% or more and 3 mass% or less, 0.5 mass% or more and 2 mass% or less, 0.5 mass% or more and 1.5 mass% or less, or 0.6 mass% or more and 1.5 mass% or less.

From the viewpoint of improving the flame retardancy of the molded article and the moldability during in-mold molding in a well-balanced manner, the blending amount (A) of the inorganic phosphinate in the expanded beads is preferably 0.5 mass% or more and 1.5 mass% or less, and more preferably 0.6 mass% or more and 1.3 mass% or less. From the same viewpoint, a ratio (A)/(B) of the blending amount (A) of the inorganic phosphinate to the blending amount (B) of the melamine-based flame retardant is preferably 0.05 or more and 10 or less, more preferably 0.1 or more and 8 or less, still more preferably 0.5 or more and 6 or less, and particularly preferably 1 or more and 5 or less.

### [Melamine-Based Flame Retardant]

The expanded beads contain a melamine-based flame retardant. In the present specification, the melamine-based flame retardant refers to a flame retardant containing melamine represented by the following structural formula (1) as a partial structure.

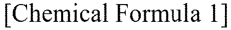

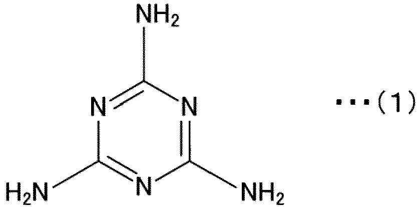

As the melamine-based flame retardant, for example, a salt of melamine and an acid exhibiting flame retardancy, such as sulfuric acid, polyphosphoric acid, cyanuric acid, pyrophosphoric acid, and hydrobromic acid, is used. The melamine-based flame retardant contained in the expanded beads is preferably one or more salts selected from the group consisting of melamine sulfate, melamine polyphosphate, melamine cyanurate, melamine pyrophosphate, and melamine hydrobromide, and more preferably melamine hydrobromide. Further, the melamine hydrobromide is particularly preferably a compound represented by the following structural formula (2).

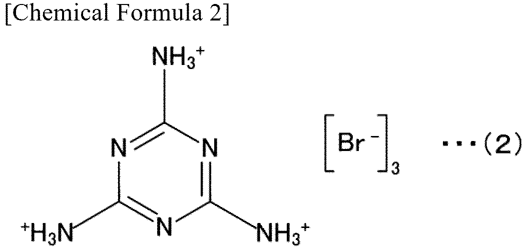

The blending amount (B) of the melamine-based flame retardant in the expanded beads is 0.05 mass% or more. By setting the blending amount (B) of the melamine-based flame retardant in the expanded beads to 0.05 mass% or more, the flame retardancy of the molded article can be easily enhanced. From such a viewpoint, the blending amount (B) of the melamine-based flame retardant is preferably 0.1 mass% or more, and more preferably 0.2 mass% or more.

On the other hand, when the total (A) + (B) of the blending amount (A) of the inorganic phosphinate and the blending amount (B) of the melamine-based flame retardant in the expanded beads is excessively large, moldability during in-mold molding may be deteriorated as described above. By setting the blending amount (B) of the melamine-based flame retardant in the expanded beads within a range in which the total (A) + (B) of the blending amount (A) of the inorganic phosphinate and the blending amount (B) of the melamine-based flame retardant is 5 mass% or less, preferably 3 mass% or less, and more preferably 1.5 mass% or less, the moldability during in-mold molding can be improved while obtaining the effect of enhancing the flame retardancy of the molded article as described above. From the viewpoint of more easily improving the moldability of the expanded beads, the blending amount (B) of the melamine-based flame retardant in the expanded beads is preferably 2 mass% or less, more preferably 1 mass% or less, still more preferably 0.5 mass% or less, and particularly preferably 0.4 mass% or less.

In constituting the preferred range of the blending amount (B) of the melamine-based flame retardant in the expanded beads, the upper limit and the lower limit of the blending amount (B) of the melamine-based flame retardant described above can be arbitrarily combined. For example, the preferred range of the blending amount (B) of the melamine-based flame retardant may be 0.05 mass% or more and 2 mass% or less, 0.05 mass% or more and 1 mass% or less, 0.05 mass% or more and 0.5 mass% or less, 0.05 mass% or more and 0.4 mass% or less, or 0.2 mass% or more and 0.4 mass% or less.

### [Antioxidant]

The expanded beads further contain a first antioxidant composed of a phenolic antioxidant and a second antioxidant composed of a phosphorus-based antioxidant and/or a sulfur-based antioxidant. The sum of a blending amount (C) of the first antioxidant and a blending amount (D) of the second antioxidant in the expanded beads is 0.05 mass% or more and 0.6 mass% or less, and a ratio (D)/(C) of the blending amount (D) of the second antioxidant to the blending amount (C) of the first antioxidant is 0.5 or more and 10 or less.

When the expanded beads contain the first antioxidant and the second antioxidant at the specific ratio in addition to the inorganic phosphinate and the melamine-based flame retardant, the blending amount (A) of the inorganic phosphinate and the blending amount (B) of the melamine-based flame retardant can be reduced while securing excellent flame retardancy. In addition, since the blending amount (A) of the inorganic phosphinate and the blending amount (B) of the melamine-based flame retardant can be easily reduced, the expanded beads can achieve both excellent flame retardancy and excellent in-mold moldability.

The reason why the flame retardancy is improved by the first antioxidant and the second antioxidant is not necessarily clear at present, but for example, the following reasons are conceivable. One method for evaluating flame retardancy is a horizontal burning test specified in UL 94. In this evaluation, one of evaluation indices is whether a molded article has caused ignition due to drip generated when a molded article is burned. Therefore, if the drip of the burning molded article can be reduced, the flame retardancy can be enhanced.

The first antioxidant added to the expanded beads is also referred to as a primary antioxidant, and is considered to have the ability to curtail generation of radicals when the molded article burns. In addition, the second antioxidant to be added to the expanded beads is also referred to as a secondary antioxidant, and can react with radicals generated when the molded article burns to thereby inactivate the radicals. It is considered that when the expanded beads uses two types of antioxidants having different actions in combination as described above, the first antioxidant and the second antioxidant are allowed to act synergistically, so that generation of the drip of the burning molded article can be curtailed even in the case where the blending amount (A) of the inorganic phosphinate and the blending amount (B) of the melamine-based flame retardant are relatively small.

When a total (C) + (D) of the blending amount (C) of the first antioxidant and the blending amount (D) of the second antioxidant is too small, the flame retardancy of the molded article may be deteriorated. From the viewpoint of sufficiently obtaining the effect of improving the flame retardancy of the molded article, the total (C) + (D) of the blending amount (C) of the first antioxidant and the blending amount (D) of the second antioxidant is set to 0.05 mass% or more with respect to the mass of the expanded beads. From the viewpoint of further enhancing the effect of improving the flame retardancy of the molded article, the total (C) + (D) of the blending amount (C) of the first antioxidant and the blending amount (D) of the second antioxidant is preferably 0.06 mass% or more, more preferably 0.07 mass% or more, and still more preferably 0.1 mass% or more with respect to the mass of the expanded beads.

On the other hand, when the total (C) + (D) of the blending amount (C) of the first antioxidant and the blending amount (D) of the second antioxidant is too large, the flame retardancy of the molded article may be deteriorated. The reason for this is considered to be that an excessive antioxidant reacts with the inorganic phosphinate and/or the melamine-based flame retardant to reduce the effect of the flame retardant. From the viewpoint of avoiding such a problem, the total (C) + (D) of the blending amount (C) of the first antioxidant and the blending amount (D) of the second antioxidant is set to 0.6 mass% or less with respect to the mass of the expanded beads. From the viewpoint of more reliably obtaining the effect of improving the flame retardancy of the molded article, the total (C) + (D) of the blending amount (C) of the first antioxidant and the blending amount (D) of the second antioxidant is preferably 0.5 mass% or less, more preferably 0.4 mass% or less, and still more preferably 0.3 mass% or less with respect to the mass of the expanded beads.

In constituting the preferred range of the total (C) + (D) of the blending amount (C) of the first antioxidant and the blending amount (D) of the second antioxidant, the upper limit and the lower limit of the total (C) + (D) of the blending amount (C) of the first antioxidant and the blending amount (D) of the second antioxidant described above can be arbitrarily combined. For example, the total (C) + (D) of the blending amount (C) of the first antioxidant and the blending amount (D) of the second antioxidant in the expanded beads may be 0.05 mass% or more and 0.5 mass% or less, 0.06 mass% or more and 0.4 mass% or less, or 0.07 mass% or more and 0.3 mass% or less.

In addition, when the ratio (D)/(C) of the blending amount (D) of the second antioxidant to the blending amount (C) of the first antioxidant is set within the specific range, the first antioxidant and the second antioxidant are allowed to act synergistically to improve the flame retardancy of the molded article. When one of the first antioxidant and the second antioxidant is excessive with respect to the other, it becomes difficult for the first antioxidant and the second antioxidant to act synergistically, and the flame retardancy of the molded article may be deteriorated.

The ratio (D)/(C) of the blending amount (D) of the second antioxidant to the blending amount (C) of the first antioxidant is preferably 0.6 or more and 8 or less, more preferably 1 or more and 6 or less, and still more preferably 2 or more and 5 or less. In this case, the effect of improving the flame retardancy of the molded article can be more reliably obtained, and a molded article having good compression properties can be more easily obtained.

A ratio {(C) + (D)}/(A) of the total (C) + (D) of the blending amount (C) of the first antioxidant and the blending amount (D) of the second antioxidant to the blending amount (A) of the inorganic phosphinate is preferably 0.05 or more and 0.5 or less, and more preferably 0.06 or more and 0.4 or less. In this case, the moldable range of the expanded beads can be further widened. Also, in this case, the effect of improving the flame retardancy of the molded article can be more reliably obtained, and a molded article having good compression properties can be more easily obtained.

As the first antioxidant, specifically, a phenolic antioxidant, that is, an antioxidant having at least one substituted or unsubstituted phenol as a partial structure in the molecular structure can be used. The expanded beads may contain one type of first antioxidant or two or more types of first antioxidants.

The phenolic antioxidant is preferably a so-called hindered phenolic antioxidant having a partial structure in which a substituent having a large molecular weight, such as a t-butyl group or a long-chain hydrocarbon group, is bonded at the meta position to an OH group in a phenol group (HO-C₆H₄-), and more preferably a hindered phenolic antioxidant having a t-butyl group at each of the two meta positions to the OH group in a phenol group (HO-C₆H₄-). Examples of the hindered phenolic antioxidant include Irganox 1010 (pentaerythritol tetrakis[3-(3,5-di-tert-butyl-4-hydroxyphenyl)propionate]), Irganox 1330 (3,3',3",5,5',5"-hexa-tert-butyl-α,α',α"-(mesitylene-2,4,6-tolyl)tri-p-cresol), Irganox 1035 (thiodiethylene bis[3-(3,5-di-tert-butyl-4-hydroxy-phenyl)propionate]), Irganox 1076 (octadecyl-3-(3,5-di-tert-butyl-4-hydroxyphenyl)-propionate), Irganox 1135 (benzenepropanoic acid, 3,5-bis(1,1-dimethylethyl)-4-hydroxy-C7-C9 branched alkyl ester) (all manufactured by BASF SE), Sumilizer GA-80 (bis[3-[3-(tert-butyl)-4-hydroxy-5-methylphenyl]propanoic acid]2,4,8,10-tetraoxaspiro[5.5]undecane-3,9-diylbis(2-methylpropane-2,1-diyl)), and Sumilizer WX-R (4,4'-thiobis(6-tert-butyl-m-cresol) (both manufactured by Sumitomo Chemical Co., Ltd.). It is noted that "Irganox" is a registered trademark of BASF Societas Europaea, and "Sumilizer" is a registered trademark of Sumitomo Chemical Co., Ltd.

As the second antioxidant, a phosphorus-based antioxidant and/or a sulfur-based antioxidant can be used. The expanded beads may contain, as the second antioxidant, either one of a phosphorus-based antioxidant and a sulfur-based antioxidant, or both antioxidants. Also, the expanded beads may contain one type of second antioxidant, or may contain two or more types of second antioxidants.

As the phosphorus-based antioxidant, an antioxidant containing at least one phosphorus atom in the molecular structure can be used. The phosphorus-based antioxidant is preferably selected from a phosphonite and a phosphite, more preferably a phosphite, and further preferably has a phosphite structure containing at least one phenyl group in the molecular structure. In addition, a substituent having a large molecular weight, such as a t-butyl group or a long-chain hydrocarbon group, is preferably bonded to the phenyl group contained in the phosphite structure. Examples of the phosphorus-based antioxidant include Irgafos 168 (tris(2,4-di-tert-butylphenyl)phosphite), Irgafos 168FF (tris(2,4-di-tert-butylphenyl)phosphite) (both manufactured by BASF SE), NONFLEX TNP (tris(nonylphenyl)phosphite, manufactured by Seiko Chemical Co., Ltd.), K-NOX 168 (tris(2,4-di-tert-butylphenyl)phosphite, manufactured by SUNKO INK CO., LTD.), and HOSTANOX P-EPQ (tetrakis(2,4-di-t-butylphenyl)-4,4'-bisphenyldiphosphonite, manufactured by Clariant Chemicals, Ltd.). It is noted that "NONFLEX" is a registered trademark of Seiko Chemical Co., Ltd., and "HOSTANOX" is a registered trademark of Höchst, Gesellschaft mit beschränkter Haftung.

As the sulfur-based antioxidant, an antioxidant containing at least one sulfur atom in the molecular structure can be used. The existing form of the sulfur atom in the sulfur-based antioxidant is not particularly limited. For example, the sulfur atom in the sulfur-based antioxidant may exist in the form of a thioether group (-S-), a thiocarbonylthio group (-N(=S)-S-), or the like. As the sulfur-based antioxidant, for example, a thioether-based antioxidant having a thioether group, such as dioctadecyl 3,3'-thiodipropionate (DSTDP), didodecyl 3,3'-thiodipropionate (DLTDP), or pentaerythritol tetrakis[3-laurylthiopropionate], an antioxidant having a thiocarbonylthio group, such as nickel(II) dibutyldithiocarbamate, or the like can be used. The sulfur-based antioxidant is preferably a thioether-based antioxidant, and more preferably dioctadecyl 3,3'-thiodipropionate.

### [Fatty Acid Amide]

The expanded beads may further contain one or more fatty acid amides. The fatty acid amide has an action of enhancing dispersibility of the inorganic phosphinate, the melamine-based flame retardant, the first antioxidant, and the second antioxidant in the expanded beads. Therefore, by using the fatty acid amide, the above-described effect is more easily obtained. In the case where the expanded beads contain a fatty acid amide, a ratio (E)/{(C) + (D)} of the blending amount (E) of the fatty acid amide to the total (C) + (D) of the blending amount (C) of the first antioxidant and the blending amount (D) of the second antioxidant is preferably 0.05 or more and 1 or less.

The fatty acid amide is a compound having a hydrocarbon group and an amide group in the molecular structure. The hydrocarbon group in the fatty acid amide is preferably a long-chain fatty acid group. Also, as the fatty acid amide, ethylene bis stearic acid amide or erucic acid amide can be suitably used.

### [Carbon Black]

The expanded beads may further contain carbon black for the purpose of coloring the expanded beads or the like. The blending amount of the carbon black in the expanded beads is preferably 0.1 mass% or more and 1 mass% or less. In this case, the molded article can be colored while securing excellent flame retardancy.

### [Other Components]

The expanded beads may contain a polymer other than the polypropylene-based resin as long as the above-described action and effect are not impaired. Examples of the other polymer include thermoplastic resins other than polypropylene-based resins such as polyethylene-based resins and polystyrene-based resins, and elastomers. The content of the other polymer in the expanded beads is preferably 20 parts by mass or less, more preferably 10 parts by mass or less, and still more preferably 5 parts by mass or less with respect to 100 parts by mass of the polypropylene-based resin, and it is particularly preferable that 0 parts by mass, that is, the expanded beads substantially contain only the polypropylene-based resin as the polymer.

In addition, the polypropylene-based resin constituting the expanded beads may contain a flame retardant other than the inorganic phosphinate and the melamine-based flame retardant as long as the above-described action and effect are not impaired. In this case, the blending amount of the flame retardant other than the inorganic phosphinate and the melamine-based flame retardant in the expanded beads is preferably 30 parts by mass or less, more preferably 20 parts by mass or less, and still more preferably 10 parts by mass or less with respect to 100 parts by mass of the sum of the inorganic phosphinate and the melamine-based flame retardant.

In addition, the polypropylene-based resin constituting the expanded beads may contain an antioxidant other than the first antioxidant and the second antioxidant as long as the above-described action and effect are not impaired. In this case, the blending amount of the antioxidant other than the first antioxidant and the second antioxidant in the expanded beads is preferably 20 parts by mass or less, more preferably 10 parts by mass or less, and still more preferably 5 parts by mass or less with respect to 100 parts by mass of the sum of the first antioxidant and the second antioxidant, and it is particularly preferable that 0 parts by mass, that is, the expanded beads substantially contain only the first antioxidant and the second antioxidant as the antioxidants.

Further, the polypropylene-based resin constituting the expanded beads may contain a NOR type hindered amine having a partial structure represented by the following structural formula (3). Examples of R in the following structural formula (3) include an alkyl group, a cycloalkyl group, an aralkyl group, and an aryl group. Also, an arbitrary structure is bonded to * in the following structural formula (3). The NOR type hindered amine may contain at least one partial structure represented by the following structural formula (3).

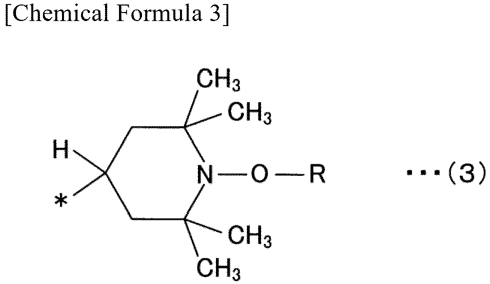

Examples of the NOR type hindered amine include NOR 116 (manufactured by BASF SE), FP-T80 (manufactured by ADEKA Corporation), and Tinuvin 123 (manufactured by BASF SE). It is noted that "Tinuvin" is a registered trademark of BASF Societas Europaea.

The blending amount of the NOR type hindered amine in the expanded beads is preferably 30 parts by mass or less, more preferably 20 parts by mass or less, and still more preferably 10 parts by mass or less with respect to 100 parts by mass of the sum of the inorganic phosphinate and the melamine-based flame retardant.

In addition, the polypropylene-based resin constituting the expanded beads may contain additives such as a cell controlling agent, a crystal nucleating agent, a plasticizer, an antistatic agent, and an ultraviolet absorber as long as the above-described action and effect are not impaired.

### [Bulk Density of Expanded Beads]

The bulk density of the expanded beads is preferably 20 kg/m³ or more and 90 kg/m³ or less. In this case, a molded article of expanded beads having excellent flame retardancy and a good balance between lightweight properties and compression properties can be more easily obtained.

The expanded beads contain an inorganic phosphinate and a melamine-based flame retardant, and further two types of antioxidants of a first antioxidant and a second antioxidant are used in combination, whereby a molded article having excellent flame retardancy can be easily obtained even in the case where the bulk ratio of the expanded beads is relatively low. The bulk density of the expanded beads is more preferably 70 kg/m³ or less, still more preferably 65 kg/m³ or less, and particularly preferably 60 kg/m³ or less from the viewpoint of further enhancing the lightweight properties of the molded article and easily exhibiting excellent flame retardancy in a stable manner. In addition, the bulk density of the expanded beads is more preferably 25 kg/m³ or more, still more preferably 30 kg/m³ or more, and particularly preferably 35 kg/m³ or more from the viewpoint of further enhancing the compression properties of the molded article and easily exhibiting excellent flame retardancy in a stable manner.

In constituting the preferred range of the bulk density of the expanded beads, the upper limit and the lower limit of the bulk density of the expanded beads described above can be arbitrarily combined. For example, the bulk density of the expanded beads may be 25 kg/m³ or more and 70 kg/m³ or less, 30 kg/m³ or more and 65 kg/m³ or less, or 35 kg/m³ or more and 60 kg/m³ or less.

### [High-Temperature Peak]

The expanded beads each preferably have a crystal structure in which an endothermic peak due to melting inherent to the polypropylene-based resin constituting the expanded beads and one or more melting peaks located on a higher temperature side than the endothermic peak appear in a DSC curve obtained when the expanded beads are heated from 23°C to 200°C at a heating rate of 10°C/min. The expanded beads having such a crystal structure have excellent mechanical strength and excellent moldability. Hereinafter, an endothermic peak due to melting inherent to the polypropylene-based resin appearing in the DSC curve is referred to as a "resin intrinsic peak", and a melting peak appearing on a higher temperature side than the resin intrinsic peak is referred to as a "high-temperature peak". The resin intrinsic peak is generated by endotherm when crystals inherent in the polypropylene-based resin constituting the expanded beads melt. On the other hand, it is presumed that the high-temperature peak is generated by melting of secondary crystals formed in the polypropylene-based resin constituting the expanded beads in a process of producing the expanded beads. That is, when a high-temperature peak appears in the DSC curve, it is presumed that secondary crystals are formed in the polypropylene-based resin.

Whether or not the expanded beads have the above-described crystal structure may be determined based on a DSC curve obtained by performing differential scanning calorimetry (DSC) under the above-described conditions in accordance with JIS K7122:1987. Also, in performing DSC, 1 to 3 mg of expanded beads may be used as a sample.

Specifically, as shown in Fig. 1, in the DSC curve obtained when heating from 23°C to 200°C at a heating rate of 10°C/min as described above (that is, first heating), a high-temperature peak ΔH2 and a resin intrinsic peak ΔH1 of the polypropylene-based resin constituting the expanded beads both appear. On the other hand, in a DSC curve obtained when performing the first heating, then cooling from 200°C to 23°C at a cooling rate of 10°C/min, and then heating from 23°C to 200°C again at a heating rate of 10°C/min (that is, second heating), only the resin intrinsic peak of the polypropylene-based resin constituting the expanded beads appears. Therefore, by comparing the DSC curve obtained at the first heating with the DSC curve obtained at the second heating, the resin intrinsic peak and the high-temperature peak can be distinguished.

From the viewpoint of further widening the molding condition range in which a good molded article of expanded beads can be obtained, the heat of fusion at the high-temperature peak of the expanded beads is preferably 5 J/g or more and 40 J/g or less, and more preferably 10 J/g or more and 30 J/g or less.

The heat of fusion of the high-temperature peak described above is a value obtained as follows. First, using 1 to 3 mg of the conditioned expanded beads as a sample, differential scanning calorimetry is performed under the condition of heating from 23°C to 200°C at a heating rate of 10°C/min to obtain a DSC curve. Next, as shown in Fig. 1, a straight line L1 connecting a point α corresponding to 80°C on the DSC curve and a point β corresponding to a melting end temperature T of the expanded beads is drawn. The melting end temperature T is an end point on the high temperature side of the high-temperature peak ΔH2, that is, an intersection of the high-temperature peak ΔH2 and the baseline on the higher temperature side than the high-temperature peak ΔH2 in the DSC curve.

After a straight line L2 is drawn, a straight line L2 passing through a maximum point γ existing between the resin intrinsic peak ΔH1 and the high-temperature peak ΔH2 and being parallel to the vertical axis of the graph is drawn. The resin intrinsic peak ΔH1 and the high-temperature peak ΔH2 are divided by the straight line L2. The heat of fusion of the high-temperature peak ΔH2 can be calculated based on the area of a portion surrounded by a portion constituting the high-temperature peak ΔH2 in the DSC curve, the straight line L1, and the straight line L2.

### [Fusion-Bonding Layer]

In addition, the expanded beads may have a fusion-bonding layer for enhancing the fusion bondability between the expanded beads during in-mold molding on the surface thereof. The fusion-bonding layer may be present on the entire surface of the expanded beads, or may be present on a part of the surface. Examples of the resin constituting the fusion-bonding layer include a crystalline polyolefin-based resin having a melting point lower than the melting point of the polypropylene-based resin constituting the expanded beads, and an amorphous polyolefin-based resin having a softening point lower than the melting point of the polypropylene-based resin constituting the expanded beads.

The method for forming a fusion-bonding layer on the surface of the expanded beads is not particularly limited, and examples thereof include a method for foaming (expanding) the resin particles having a fusion-bonding layer, and a method for adhering a fusion-bonding layer to the expanded beads after obtaining the expanded beads. When the resin particles having a fusion-bonding layer are foamed (expanded) to obtain expanded beads, it is preferable to adopt a method of laminating a fusion-bonding layer on the surfaces of resin particles by co-extrusion when the resin particles are produced.

### (Method for Producing Polypropylene-Based Resin Expanded Beads)

As the method for producing expanded beads, a method can be adopted in which polypropylene-based resin particles (hereinafter, referred to as "resin particles".) containing an inorganic phosphinate, a melamine-based flame retardant, a first antioxidant composed of a phenolic antioxidant, and a second antioxidant composed of a phosphorus-based antioxidant and/or a sulfur-based antioxidant are prepared, and then the resin particles are foamed (expanded).

In producing the polypropylene-based resin expanded beads, it is preferable that expanded beads are obtained by foaming resin particles in which the blending amount (A) of the inorganic phosphinate in the resin particles is 0.5 mass% or more, the blending amount (B) of the melamine-based flame retardant in the resin particles is 0.05 mass% or more, the total (A) + (B) of the blending amount (A) of the inorganic phosphinate and the blending amount (B) of the melamine-based flame retardant in the resin particles is 5 mass% or less, the total (C) + (D) of the blending amount (C) of the first antioxidant and the blending amount (D) of the second antioxidant in the resin particles is 0.05 mass% or more and 0.6 mass% or less, and the ratio (D)/(C) of the blending amount (D) of the second antioxidant to the blending amount (C) of the first antioxidant in the resin particles is 0.5 or more and 10 or less. In this case, the blending amounts of the inorganic phosphinate, the melamine-based flame retardant, the antioxidants, and the like in the resin particles are the blending amounts of the inorganic phosphinate, the melamine-based flame retardant, the antioxidants, and the like in the expanded beads.

### [Preparation of Resin Particles]

In producing the expanded beads, first, the resin particles are prepared. The method for preparing resin particles is not particularly limited. For example, in the case of preparing resin particles by a strand cutting method, a resin melt-kneaded product containing a polypropylene-based resin constituting expanded beads, an inorganic phosphinate, a melamine-based flame retardant, a first antioxidant, and a second antioxidant is extruded into a strand shape from a small hole of a die attached to the downstream side of an extruder. At this time, the blending amounts of the inorganic phosphinate, the melamine-based flame retardant, the first antioxidant, and the second antioxidant are each set within the ranges described above. Also, additives such as carbon black and a cell controlling agent may be added to the resin melt-kneaded product as necessary. The stranded extruded product is taken up and then cut into a desired length to obtain resin particles.

When the resin melt-kneaded product described above is prepared, each component described above may be directly kneaded with a heat-melted product of a polypropylene-based resin, but it is preferable to prepare a flame retardant masterbatch containing a polypropylene-based resin, an inorganic phosphinate, a melamine-based flame retardant, a first antioxidant, and a second antioxidant in advance, and knead the flame retardant masterbatch and the polypropylene-based resin under heating to prepare the resin melt-kneaded product. As described above, by melting and kneading the flame retardant masterbatch prepared in advance and the polypropylene-based resin, the inorganic phosphinate and the like can be uniformly dispersed in the resin melt-kneaded product, and the blending amounts of the inorganic phosphinate and the like in the resin melt-kneaded product can be more accurately adjusted.

When the flame retardant masterbatch is prepared, the polypropylene-based resin used in the flame retardant masterbatch may be the same polypropylene-based resin as the polypropylene-based resin constituting the resin particles, or may be a different polypropylene-based resin. Also, when the flame retardant masterbatch is used, it is preferable that a total (a) + (b) of a blending amount (a) of the inorganic phosphinate and a blending amount (b) of the melamine-based flame retardant in the flame retardant masterbatch is 20 mass% or more and 50 mass% or less, a total (c) + (d) of a blending amount (c) of the first antioxidant and a blending amount (d) of the second antioxidant is 0.5 mass% or more and 10 mass% or less, and a ratio (d)/(c) of the blending amount (d) of the second antioxidant to the blending amount (c) of the first antioxidant is 0.5 or more and 10 or less. In addition, the flame retardant masterbatch preferably contains a fatty acid amide. In this case, a ratio (e)/{(c) + (d)} of a blending amount (e) of the fatty acid amide to the total (c) + (d) of the blending amount (c) of the first antioxidant and the blending amount (d) of the second antioxidant is preferably 0.01 or more and 1 or less.

When the resin particles are prepared using the flame retardant masterbatch, a ratio of the flame retardant masterbatch to the polypropylene-based resin mixed with the flame retardant masterbatch is preferably polypropylene-based resin : flame retardant masterbatch = 99 : 1 to 90 : 10.

Moreover, when the resin particles are prepared using the flame retardant masterbatch, it is preferable that a melt flow rate of the polypropylene-based resin to be mixed with the flame retardant masterbatch is 6 g/10 min or more and 9 g/10 min or less, and that a ratio of the melt flow rate of the flame retardant masterbatch to the melt flow rate of the polypropylene-based resin is 2 or more and 5 or less. In this case, the inorganic phosphinate and the like can be more uniformly dispersed in the resin melt-kneaded product.

In preparing the flame retardant masterbatch, a method similar to the method for preparing resin particles described above, that is, a method of supplying a polypropylene-based resin, an inorganic phosphinate, and the like to an extruder and melting and kneading them in the extruder can be adopted.

### [Foaming of Resin Particles]

Expanded beads can be obtained by foaming (expanding) the resin particles. The method for foaming the resin particles is not particularly limited, but for example, the resin particles can be foamed by a method called "direct expanding method" in which resin particles containing a blowing agent and dispersed in an aqueous medium in a container are released together with the aqueous medium into an atmosphere of a pressure lower than the pressure in the container.

In the direct expanding method, first, the resin particles are placed in a container and dispersed in an aqueous medium. At this time, a dispersant, a dispersion aid, a surfactant, or the like for dispersing the resin particles in the aqueous medium in the container may be added as necessary.

As the dispersant, for example, inorganic fine particles such as aluminum oxide, tricalcium phosphate, magnesium pyrophosphate, zinc oxide, kaolin, and mica can be used. These inorganic fine particles may be used alone, or two or more inorganic fine particles may be used in combination. As the dispersion aid, for example, aluminum sulfate or the like can be used. Also, as the surfactant, for example, an anionic surfactant such as sodium alkylbenzene sulfonate, sodium dodecylbenzene sulfonate, or sodium alkanesulfonate can be used. These surfactants may be used alone, or two or more surfactants may be used in combination.

Next, a blowing agent is supplied into the container to raise the pressure in the container, thereby impregnating the resin particles with the blowing agent. As a result, resin particles containing a blowing agent can be obtained. In this step, by heating the resin particles in the container together with the aqueous medium, impregnation of the resin particles with the blowing agent can be promoted.

As the blowing agent used in the expanding step, for example, an inorganic physical blowing agent such as carbon dioxide, air, nitrogen, helium, or argon, a hydrocarbon such as propane, n-butane, isobutane, n-pentane, isopentane, or hexane, or an organic physical blowing agent such as a halogenated hydrocarbon such as ethyl chloride, 2,3,3,3-tetrafluoropropene, trans-1,3,3,3-tetrafluoropropene, or trans-1-chloro-3,3,3-trifluoropropene can be used. From the viewpoints of environmental load and handleability, carbon dioxide is preferably used as the blowing agent. An addition amount of the blowing agent is preferably 0.1 parts by mass or more and 30 parts by mass or less, and preferably 0.5 parts by mass or more and 15 parts by mass or less with respect to 100 parts by mass of the resin particles.

The pressure in the container immediately before expansion is preferably 0.5 MPa (G) or more in gauge pressure. On the other hand, the pressure in the container is preferably 4.0 MPa (G) or less in gauge pressure. Within the above range, expanded beads can be safely produced without the risk of breakage, explosion, or the like of the container.

After impregnating the resin particles with the blowing agent, the contents of the container are released into an atmosphere having a pressure lower than the pressure in the container. As a result, the resin particles are expanded to form cell structures, and are cooled by outside air (that is, atmosphere) to stabilize the cell structures, thereby obtaining expanded beads.

In the method for producing resin particles, a step of adjusting the crystal structure of a resin component constituting the resin particles may be performed in a period from dispersing the resin particles in the aqueous medium until expanding the resin particles. By expanding the resin particles after adjusting the crystal structure of the resin component, expanded beads having excellent in-mold moldability and excellent mechanical strength can be easily obtained.

A method for adjusting the crystal structure of the resin component is, for example, as follows. First, a holding step of holding at a temperature of (melting point of the polypropylene-based resin constituting the resin particles - 15°C) or higher and (melting point of the polypropylene-based resin constituting the resin particles + 15°C) or lower for a sufficient time, preferably about 10 to 60 minutes is performed. By performing this holding step, crystals that generate a high-temperature peak during melting are easily formed in the polypropylene-based resin constituting the expanded beads, and expanded beads having a crystal structure in which a high-temperature peak appears can be more easily obtained. The temperature in the container during expansion is preferably (melting point of the polypropylene-based resin constituting the resin particles) or higher and (melting point of the polypropylene-based resin constituting the resin particles + 15°C) or lower.

In the method for producing expanded beads, the resin particles subjected to the holding step may be prepared in advance, and the resin particles may be foamed to obtain expanded beads. From the viewpoint of improving productivity of the expanded beads, it is preferable to obtain expanded beads having a crystal structure in which a high-temperature peak appears by heating the resin particles dispersed in the dispersion medium in the container in the presence of the blowing agent to perform the holding step, and then releasing the content of a sealed container from the container into an atmosphere having a pressure lower than the pressure in the container to foam the resin particles.

In the method for producing expanded beads, when the resin particles are expanded, the resin particles may be expanded in one step as described above, or the resin particles may be expanded in a plurality of steps of two or more steps. In the case of expanding the resin particles in two steps, first, in the first expanding step, the resin particles are foamed by a direct expanding method to obtain first-step expanded beads. In the second expanding step, for example, the first-step expanded beads may be subjected to a pressure treatment with air or the like to rise the pressure in the cells (internal pressure) of the first-step expanded beads, and then the first-step expanded beads may be heated with steam or the like to be further expanded. By expanding the resin particles in a plurality of steps in this manner, expanded beads having a higher expansion ratio (that is, having a low bulk density) can be easily obtained.

### (Molded Article of Polypropylene-Based Resin Expanded Beads)

A molded article can be obtained by in-mold molding of the expanded beads. The molded article is produced, for example, as follows. First, the expanded beads are filled into a mold having a cavity corresponding to a desired shape of a molded article, and a large number of expanded beads are heated in the mold by a heating medium such as steam. The expanded beads in the cavity further expand by heating and are fused to each other. As a result, a large number of expanded beads are integrated, and a molded article corresponding to the shape of the cavity is obtained.

### [Density of Molded Article]

The density of the molded article is preferably 20 kg/m³ or more and 100 kg/m³ or less, and more preferably 30 kg/m³ or more and 90 kg/m³ or less. In this case, a molded article of expanded beads having excellent flame retardancy and a good balance between lightweight properties and compression properties can be more easily obtained. The density of the molded article is calculated by dividing the mass (unit: g) of the molded article by the volume (unit: L) obtained from the outer dimension of the molded article and performing unit conversion.

### [Flame Retardancy of Molded Article]

The flame retardancy of the molded article can be evaluated by the result of a "horizontal burning test for expanded material" specified in UL 94 and an oxygen index measured in accordance with JIS K 7201-2:2007.

The method of the horizontal burning test specified in UL 94 is specifically as follows. First, a test apparatus is prepared. The test apparatus includes a wire mesh horizontally arranged such that a height from a reference surface is 175 mm ± 25 mm, a burner with a wing tip arranged below the wire mesh, and absorbent cotton arranged below a region of the wire mesh where a test body is arranged. The burner is arranged such that a height from the tip of the wing to the wire mesh is 13 mm ± 1 mm.

Next, the expanded beads are molded in a mold, and then a plate-shaped test body having a length of 150 mm, a width of 50 mm, and a thickness of 13 mm is cut out from the obtained molded article. The test body may or may not have a skin surface, that is, a surface that was in contact with the inner wall surface of the mold during in-mold molding.

Next, the test body cut out from the molded article is allowed to stand in an environment of a temperature of 21°C and a relative humidity of 50% for 24 hours to condition the state of the test body. In the conditioned test body, reference lines are drawn respectively at positions of 25 mm, 60 mm, and 125 mm from a base end in a length direction.

The test body thus prepared is placed on the wire mesh of the test apparatus. In the case where one of two surfaces surrounded by a side having a length of 150 mm and a side having a width of 50 mm of the test body is a skin surface, the test body is placed on the wire mesh with the skin surface facing downward. Thereafter, the burner is ignited, and the amount of gas, the amount of air, and the like are adjusted such that a height of flame is 38 mm ± 1 mm. In this condition, the burner is moved, and the flame of the burner is brought into contact with the base end of the test body for 60 seconds. Thereafter, the flame of the burner is removed from the test body, and the test body is left to stand until the burning of the test body is completed. The above operation is performed on five test bodies, and the flame retardancy can be evaluated based on the after-flame time, the after-glow time, the presence or absence of ignition of the absorbent cotton by dropping of a flaming substance, and the damaged length of the test body.

The molded article preferably has flame retardancy evaluated as HF-1 in the "horizontal burning test of expanded material" specified in UL 94. More specifically, it is preferable that the following four requirements are satisfied: (1) four out of five test bodies have an after-flame time of 2 seconds or less, and the remaining one test body has an after-flame time of 10 seconds or less; (2) all of the five test bodies have an after-glow time of 30 seconds or less; (3) all of the five test bodies have caused no ignition of the absorbent cotton due to dropping of a flaming substance; and (4) all of the five test bodies have been damaged less than 60 mm in length. Such a molded article has excellent flame retardancy, and thus can be suitably used particularly for applications requiring high flame retardancy.

In addition, the method for measuring the oxygen index based on JIS K 7201-2: 2007 is as follows. First, in-mold molding of the expanded beads was performed, and then a rod-shaped test body having a length of 150 mm, a width of 10 mm, and a thickness of 10 mm is cut out from the obtained molded article. The test body is mounted on to a predetermined measuring apparatus. Thereafter, in a state where the inside of the measuring apparatus is filled with a mixed gas of oxygen and nitrogen, a flame is brought into contact with the upper end of a test piece. The flame contact time to the test piece is set to a maximum of 30 seconds.

The above operation is performed by variously changing the oxygen concentration of the mixed gas filled in the measuring apparatus. Then, the lowest oxygen concentration among oxygen concentrations at which the burning time is 180 seconds or more or the length of the test body burned is 50 mm or more is defined as the oxygen index.

The oxygen index of the molded article is preferably 27% or more. Such a molded article has excellent flame retardancy, and thus can be suitably used particularly for applications requiring high flame retardancy.

### Examples

Examples of the expanded beads and a method for producing the same will be described below. Inorganic phosphinates, melamine-based flame retardants, first antioxidants, second antioxidants, and a fatty acid amide used in this example are specifically as follows.

### [Inorganic Phosphinates]

A1: Aluminum phosphinate
A2: Calcium phosphinate

### [Melamine-Based Flame Retardants]

B1: Melamine hydrobromide

### [First Antioxidants]

C1: Phenolic antioxidant ("Irganox 1010" manufactured by BASF SE)
C2: Phenolic antioxidant ("Irganox 1330" manufactured by BASF SE)

### [Second Antioxidants]

D1: Phosphorus-based antioxidant ("Irgafos 168" manufactured by BASF SE)
D2: Sulfur-based antioxidant (3,3'-thiodipropionic acid dioctadecyl)

### [Fatty Acid Amide]

E1: Ethylene bis stearic acid amide

In this example, first, a flame retardant masterbatch containing a polypropylene-based resin, an inorganic phosphinate, a melamine-based flame retardant, a first antioxidant, and a second antioxidant was prepared, then resin particles were prepared using the flame retardant masterbatch, and the obtained resin particles were expanded to obtain expanded beads. The respective steps are described in more detail below.

### [Preparation of Flame Retardant Masterbatch]

An extruder having an inner diameter of 20 mm and equipped with a strand forming die at the outlet was used for preparing a flame retardant masterbatch. First, a polypropylene-based resin, an inorganic phosphinate, a melamine-based flame retardant, a first antioxidant, a second antioxidant, and a fatty acid amide as shown in Table 1 and Table 2 were supplied to the extruder, and kneaded while being heated in the extruder to prepare melt-kneaded product.

Next, the melt-kneaded product was guided to the strand forming die, and the melt-kneaded product was extruded into a strand from a nozzle of the die tip. The stranded extruded product was taken up and cooled, then cut into an appropriate length using a pelletizer to obtain flame retardant masterbatches MB1 to MB8 as shown in Table 1 and flame retardant masterbatches MB9 to MB16 as shown in Table 2. The average mass per flame retardant masterbatch was adjusted to 15 mg.

The blending amount (a) of the inorganic phosphinate, the blending amount (b) of the melamine-based flame retardant, the blending amount (c) of the first antioxidant, the blending amount (d) of the second antioxidant, and the blending amount (e) of the fatty acid amide in each flame retardant masterbatch were as shown in Tables 1 and 2. Also, the melt flow rate (that is, MFR) of each flame retardant masterbatch was as shown in Tables 1 and 2. It is noted that the melt flow rate of the flame retardant masterbatch is a value measured under conditions of a temperature of 230°C and a load of 2.16 kg in accordance with JIS K7210-1:2014.

### [Preparation of Resin Particles]

An extruder having an inner diameter of 26 mm and equipped with a strand forming die at the outlet was used for preparing resin particles. First, an ethylene-propylene random copolymer as a polypropylene-based resin, a flame retardant masterbatch of the type and amount shown in Tables 3 and 4, a cell controlling agent, and carbon black were supplied to the extruder, and kneaded while being heated in the extruder to prepare a resin melt-kneaded product. It is noted that the ethylene-propylene random copolymer used in this example has a melting point of 143°C and an MFR of 8 g/10 min. The MFR of the ethylene-propylene random copolymer is a value measured under conditions of a temperature of 230°C and a load of 2.16 kg in accordance with JIS K7210-1:2014.

The resin melt-kneaded product was guided to the strand forming die, and the resin melt-kneaded product was extruded into a strand shape from a nozzle of the die tip. The stranded extruded product was taken up and cooled, then cut into an appropriate length using a pelletizer to obtain resin particles. Zinc borate was used as the cell controlling agent, and the blending amount of zinc borate was 500 ppm by mass with respect to the mass of the ethylene-propylene random copolymer. Also, the blending amount of the carbon black was 0.4 mass% with respect to the mass of the ethylene-propylene random copolymer. The average mass per resin particle was adjusted to 1.0 mg. The blending amount (A) of the inorganic phosphinate, the blending amount (B) of the melamine-based flame retardant, the blending amount (C) of the first antioxidant, the blending amount (D) of the second antioxidant, and the blending amount (E) of the fatty acid amide in each resin particle were as shown in Tables 3 and 4.

### [Foaming (Expansion) of Resin Particles]

The resin particles thus obtained were foamed by a direct expanding method to obtain expanded beads shown in Table 2. More specifically, first, 500 g of resin particles was put into a container having an internal volume of 5 L together with 3.5 L of water as an aqueous medium. Next, 3 g of a dispersant and 0.2 g of a surfactant were added to a container, and the resin particles were dispersed in the aqueous medium. Kaolin was used as the dispersant, and sodium dodecylbenzenesulfonate was used as the surfactant.

Thereafter, carbon dioxide as a blowing agent was supplied into the sealed container while stirring the inside of the container, and the temperature in the container was raised to approximately 154°C. The pressure in the container at this time was 2.0 MPa (G). After the temperature of the container reached the desired temperature, the temperature in the container was maintained for 15 minutes to impregnate the resin particles with the blowing agent and to adjust the crystal structure of the polypropylene-based resin constituting the resin particles. Thereafter, the container was opened, and the contents were released into an atmosphere having the atmospheric pressure to foam the resin particles. The expanded beads were then dried in an atmosphere having a temperature of 23°C and a relative humidity of 50% for 24 hours. As a result, expanded beads of Examples 1 to 8 shown in Table 3 and expanded beads of Comparative Examples 1 to 8 shown in Table 4 were obtained.

The resin particles and the expanded beads thus obtained, and molded articles obtained by in-mold molding of the expanded beads were used to evaluate the evaluation items shown in Tables 3 and 4. Evaluation methods of these evaluation items are as follows.

### [Bulk Density of Expanded Beads]

For the measurement of the bulk density of the expanded beads, a group of expanded beads of 3 g or more and 10 g or less was used. First, the expanded bead group was dried in an environment of a temperature of 60°C and an air pressure of 1 atm for 2 hours, and then the weight of the expanded beads was measured. This expanded bead group was filled into a measuring cylinder, and the bottom surface of the measuring cylinder was lightly tapped several times on a floor surface to stabilize the height of the expanded beads filled into the measuring cylinder. Thereafter, a bulk volume (unit: L) of the expanded bead group was read from a scale of the measuring cylinder. Then, a mass (unit: g) of the expanded bead group in the measuring cylinder was divided by the above-described bulk volume, and then the unit was converted to calculate the bulk density (unit: kg/m³) of the expanded beads.

### [Heat of Fusion of High-Temperature Peak]

The heat of fusion at the high-temperature peak of the expanded beads was measured by the method described above.

### [Moldable Range]

In the evaluation of the moldable range, molded articles were produced by performing in-mold molding while changing the molding pressure during main heating from 0.30 MPa (G) to 0.38 MPa (G) in increments of 0.01 MPa, and the moldable range was determined based on surface property, fusion bondability and recoverability of the obtained molded articles.

A method for producing a molded article is as follows. First, the expanded beads were placed in a pressure-resistant container, the inside of the pressure-resistant container was pressurized with air to impregnate the expanded beads with air, and an internal pressure of 0.10 MPa (G) was applied to the expanded beads. Next, the expanded beads to which the internal pressure was applied were filled into a mold having a cavity capable of molding a flat plate-shaped molded article of expanded beads having a length of 250 mm, a width of 200 mm, and a thickness of 50 mm.

Next, steam was supplied into the mold to perform in-mold molding. In the in-mold molding, first, steam was supplied into the mold for 5 seconds to perform preheating in a state where a drain valve of the mold was opened. Subsequently, the drain valve was closed, and steam was supplied from one surface side of the mold to perform one-side heating until the pressure reached a pressure lower than the molding pressure during main heating by 0.08 MPa (G). Next, steam was supplied from the other surface side of the mold to perform one-side heating until the pressure reached a pressure lower than the molding pressure during main heating by 0.04 MPa (G). Thereafter, steam was supplied from both surfaces of the mold until the pressure reached the molding pressure during main heating to perform main heating. After completion of the main heating, the pressure in the mold was released, and the molded article was cooled in the mold until the surface pressure due to the expanding force of the molded article reached 0.04 MPa (G).

Thereafter, the molded article of expanded beads taken out from the mold was left to stand in an oven at 80°C for 12 hours to perform an aging step. After the aging step, the molded article of expanded beads was conditioned by allowing the molded article of expanded beads to stand under conditions of a relative humidity of 50%, 23°C, and 1 atm for 24 hours. The surface property, fusion bondability and recoverability of the conditioned molded article of expanded beads were evaluated, and the range of the molding pressure that passed all items in the evaluation criteria described later (that is, the molding pressure at which a passed product can be obtained) was defined as the moldable range. It can be determined that the wider the moldable range, the better the moldability.

For the expanded beads of Comparative Example 8 shown in Table 4, since a passed product could not be obtained in the above-described molding pressure range, it was described as "None" in the column of "Moldable range" of Table 4. Also, for Comparative Example 8, other evaluations of the molded article were not performed. Therefore, a symbol "-" was described in the evaluation items of the molded article in Comparative Example 8.

Evaluation methods of the surface property, fusion bondability, and recoverability in the evaluation of the possible range for molding are as follows.

### · Surface property

A 100 mm × 100 mm square was drawn at the center of one skin surface in the thickness direction of a molded article of expanded beads, and then a diagonal line was drawn from any one corner of the square. Then, the number of voids existing on the diagonal line, specifically, voids having a size of 1 mm × 1 mm or more among gaps formed between the expanded beads was counted. Then, when the number of voids was 2 or less, it was determined as pass, and when the number of voids was 3 or more, it was determined as fail.

### · Fusion bondability

A molded article of expanded beads was fractured so as to be approximately equally divided in the longitudinal direction. From among the expanded beads exposed on a fracture surface, 100 or more expanded beads randomly were chosen, and then the chosen expanded beads were each visually observed to determine whether to be an expanded bead fractured inside the bead (that is, an expanded bead underwent material fracture) or an expanded bead fractured at an interface between the expanded beads. Then, a value in which a ratio of the number of expanded beads fractured inside the beads to the total number of the observed expanded beads was expressed in percentage (that is, a material fracture rate) was calculated, and this value was taken as a fusion-bonding rate. Then, a case where the fusion-bonding rate was 80% or more was determined as pass, and a case where the fusion-bonding rate was less than 80% was determined as fail.

### · Recoverability

In a plan view of the molded article of expanded beads viewed from the thickness direction, thicknesses of the molded article of expanded beads at four positions 10 mm inward from each apex in the center direction and a thickness of the molded article of expanded beads at the center were measured. Next, a ratio (unit:%) of the thickness of the thinnest portion to the thickness of the thickest portion among the measured portions was calculated. When the thickness ratio thus obtained was 95% or more, it was determined as pass, and when the thickness ratio was less than 95%, it was determined as fail.

### [Density of Molded Article]

In-mold molding was performed at the lowest molding pressure in the moldable range described above to obtain a molded article. The molded article was dried in an environment at 80°C for 24 hours, and then the mass (unit: g) of the molded article was measured. Thereafter, the mass of the molded article was divided by the volume (unit: L) calculated from the outer dimension of the molded article, and then the unit was converted to calculate the density (unit: kg/m³) of the molded article.

### [Oxygen Index]

In-mold molding was performed at the lowest molding pressure in the moldable range described above to obtain a molded article. A rod-shaped test body having a length of 150 mm, a width of 10 mm, and a thickness of 10 mm was cut out from the obtained molded article so as not to include the skin surface, that is, the surface in contact with the inner surface of the mold during in-mold molding. Using this test body, the oxygen index was measured according to JIS K 7201-2:2007. The oxygen index thus obtained is shown in Tables 3 and 4.

### [UL 94 Horizontal Burning Test]

In-mold molding was performed at the lowest molding pressure in the moldable range described above to obtain a molded article. A plate-shaped test piece was cut out from the obtained molded article such that the test piece had dimensions of a length of 150 mm, a width of 50 mm, and a thickness of 13 mm, and one of two surfaces of the test piece surrounded by a side of a length of 150 mm and a side of a width of 50 mm was a skin surface. The test piece was placed on a wire mesh of a measuring apparatus in accordance with UL 94 with the skin surface facing downward. Thereafter, a horizontal burning test was performed by a method conforming to UL 94.

In Tables 3 and 4, the classification of the test results specified in UL 94 and ISO 3582 is described. More specifically, when the test result satisfies the following four requirements: (1) four out of five test bodies have an after-flame time of 2 seconds or less, and the remaining one test body has an after-flame time of 10 seconds or less; (2) all of the five test bodies have an after-glow time of 30 seconds or less; (3) all of the five test bodies have caused no ignition of the absorbent cotton due to dropping of a flaming substance; and (4) all of the five test bodies have been damaged less than 60 mm in length, it was determined that the test result corresponded to HF-1 in the UL 94 horizontal burning test, and was described as "HF-1" in Tables 3 and 4. In addition, when the test result satisfies the following four requirements: (1) four out of five test bodies have an after-flame time of 2 seconds or less, and the remaining one test body has an after-flame time of 10 seconds or less; (2) all of the five test bodies have an after-glow time of 30 seconds or less; (3) at least one of the five test bodies has caused ignition of the absorbent cotton due to dropping of a flaming substance; and (4) all of the five test bodies have been damaged less than 60 mm in length, it was determined that the test result corresponded to HF-2 in the UL 94 horizontal burning test, and was described as "HF-2" in Tables 3 and 4. In Comparative Examples, ignition of the absorbent cotton due to dropping of a flaming substance occurred in at least one of the five test bodies, and thus the test result was evaluated as "HF-2".

### [Table 1]

**(Table 1)**

| Flame retardant masterbatch | | - | MB1 | MB2 | MB3 | MB4 | MB5 | MB6 | MB7 | MB8 |
|---|---|---|---|---|---|---|---|---|---|---|
| MFR | | g/10 min | 17 | 18 | 18 | 18 | 16 | 15 | 15 | 15 |
| Inorganic phosphinate | Type | - | A1 | A1 | A1 | A1 | A1 | A1 | A1 | A2 |
| | Blending amount (a) | Mass% | 27.5 | 27.5 | 27.5 | 27.5 | 27.5 | 27.5 | 27.5 | 27.5 |
| Melamine-based flame retardant | Type | - | B1 | B1 | B1 | B1 | B1 | B1 | B1 | B1 |
| | Blending amount (b) | Mass% | 8 | 8 | 8 | 8 | 8 | 8 | 8 | 8 |
| First antioxidant | Type | - | C1 | C1 | C1 | C1 | C1 | C1 | C1 | C2 |
| | Blending amount (c) | Mass% | 0.6 | 0.4 | 0.3 | 0.6 | 2.0 | 3.8 | 3.8 | 3.8 |
| Second antioxidant | Type | - | D1 | D1 | D1 | D1 | D1 | D1 | D2 | D2 |
| | Blending amount (d) | Mass% | 2.5 | 1.7 | 1.0 | 1.0 | 8.0 | 3.8 | 3.8 | 3.8 |
| Fatty acid amide | Type | - | E1 | E1 | E1 | E1 | E1 | E1 | E1 | E1 |
| | Blending amount (e) | Mass% | 0.5 | 0.5 | 0.5 | 0.5 | 0.5 | 0.5 | 0.5 | 0 |
| (a)+(b) | | Mass% | 36 | 36 | 36 | 36 | 36 | 36 | 36 | 36 |
| (a)/(b) | | - | 3.4 | 3.4 | 3.4 | 3.4 | 3.4 | 3.4 | 3.4 | 3.4 |
| (c)+(d) | | Mass% | 3.1 | 2.1 | 1.3 | 1.6 | 10.0 | 7.5 | 7.5 | 7.5 |
| (d)/(c) | | - | 4.0 | 4.0 | 4.0 | 1.6 | 4.0 | 1.0 | 1.0 | 1.0 |
| {(c)+(d)}/(a) | | - | 0.11 | 0.08 | 0.05 | 0.06 | 0.36 | 0.27 | 0.27 | 0.27 |
| (e)/{(c)+(d)} | | - | 0.16 | 0.24 | 0.40 | 0.31 | 0.05 | 0.07 | 0.07 | 0 |

### [Table 2]

**(Table 2)**

| Flame retardant masterbatch | | - | MB9 | MB10 | MB11 | MB12 | MB13 | MB14 | MB15 | MB16 |
|---|---|---|---|---|---|---|---|---|---|---|
| MFR | | g/10 min | 21 | 19 | 19 | 19 | 18 | 18 | 15 | 19 |
| Inorganic phosphinate | Type | - | A1 | A1 | A1 | A1 | A1 | A1 | A1 | A1 |
| | Blending amount (a) | Mass% | 27.5 | 27.5 | 27.5 | 27.5 | 27.5 | 27.5 | 27.5 | 27.5 |
| Melamine-based flame retardant | Type | - | B1 | B1 | B1 | B1 | B1 | B1 | B1 | B1 |
| | Blending amount (b) | Mass% | 8 | 8 | 8 | 8 | 8 | 8 | 8 | 8 |
| First antioxidant | Type | - | None | C1 | None | None | C1 | C1 | C1 | C1 |
| | Blending amount (c) | Mass% | 0 | 3.1 | 0 | 0 | 0.3 | 7.3 | 12.5 | 0.1 |
| Second antioxidant | Type | - | None | None | D1 | D2 | D1 | D1 | D1 | D1 |
| | Blending amount (d) | Mass% | 0 | 0 | 3.1 | 3.1 | 7.3 | 0.3 | 12.5 | 0.5 |
| Fatty acid amide | Type | - | E1 | E1 | E1 | E1 | E1 | E1 | E1 | E1 |
| | Blending amount (e) | Mass% | 0.5 | 0.5 | 0.5 | 0.5 | 0.5 | 0.5 | 0.5 | 0.5 |
| (a)+(b) | | Mass% | 36 | 36 | 36 | 36 | 36 | 36 | 36 | 36 |
| (a)/(b) | | - | 3.4 | 3.4 | 3.4 | 3.4 | 3.4 | 3.4 | 3.4 | 3.4 |
| (c)+(d) | | Mass% | 0 | 3.1 | 3.1 | 3.1 | 7.5 | 7.5 | 25.0 | 0.6 |
| (d)/(c) | | - | - | 0 | - | - | 29.0 | 0 | 1.0 | 4.0 |
| {(c)+(d)}/(a) | | - | 0 | 0.11 | 0.11 | 0.11 | 0.27 | 0.27 | 0.91 | 0.02 |
| (e)/{(c)+(d)} | | - | - | 0.16 | 0.16 | 0.16 | 0.07 | 0.07 | 0.02 | 0.8 |

### [Table 3]

**(Table 3)**

| | | | | Example 1 | Example 2 | Example 3 | Example 4 | Example 5 | Example 6 | Example 7 | Example 8 |
|---|---|---|---|---|---|---|---|---|---|---|---|
| Raw materials | Polypropylene-based resin | Mass ratio | Parts by mass | 96 | 94 | 90 | 96 | 96 | 96 | 96 | 96 |
| | Flame retardant masterbatch | Type | - | MB1 | MB2 | MB3 | MB4 | MB5 | MB6 | MB7 | MB8 |
| | | Mass ratio | Parts by mass | 4 | 6 | 10 | 4 | 4 | 4 | 4 | 4 |
| Resin particles | Inorganic phosphinate | Type | - | A1 | A1 | A1 | A1 | A1 | A1 | A1 | A2 |
| | | Blending amount (A) | Mass% | 1.1 | 1.7 | 2.8 | 1.1 | 1.1 | 1.1 | 1.1 | 1.1 |
| | Melamine-based flame retardant | Type | - | B1 | B1 | B1 | B1 | B1 | B1 | B1 | B1 |
| | | Blending amount (B) | Mass% | 0.3 | 0.5 | 0.8 | 0.3 | 0.3 | 0.3 | 0.3 | 0.3 |
| | First antioxidant | Type | - | C1 | C1 | C1 | C1 | C1 | C1 | C1 | C2 |
| | | Blending amount (C) | Mass% | 0.03 | 0.03 | 0.03 | 0.03 | 0.08 | 0.15 | 0.15 | 0.15 |
| | Second antioxidant | Type | - | D1 | D1 | D1 | D1 | D1 | D1 | D2 | D2 |
| | | Blending amount (D) | Mass% | 0.10 | 0.10 | 0.10 | 0.04 | 0.32 | 0.15 | 0.15 | 0.15 |
| | Fatty acid amide | Type | - | E1 | E1 | E1 | E1 | E1 | E1 | E1 | E1 |
| | | Blending amount (E) | Mass% | 0.02 | 0.03 | 0.05 | 0.02 | 0.02 | 0.02 | 0.02 | 0.00 |
| | (A)+(B) | | | 1.4 | 2.1 | 3.6 | 1.4 | 1.4 | 1.4 | 1.4 | 1.4 |
| | (A)/(B) | | - | 3 | 3 | 3 | 3 | 3 | 3 | 3 | 3 |
| | (C)+(D) | | | 0.13 | 0.13 | 0.13 | 0.07 | 0.40 | 0.30 | 0.30 | 0.30 |
| | (D)/(C) | | - | 4.0 | 4.0 | 4.0 | 1.6 | 4.0 | 1.0 | 1.0 | 1.0 |
| | {(C)+(D)}/(A) | | - | 0.11 | 0.08 | 0.05 | 0.06 | 0.36 | 0.27 | 0.27 | 0.27 |
| | (E)/{(C)+(D)} | | - | 0.16 | 0.24 | 0.40 | 0.31 | 0.05 | 0.07 | 0.07 | 0 |
| | {(C)+(D)}/{(A)+(B)} | | - | 0.09 | 0.06 | 0.04 | 0.05 | 0.28 | 0.21 | 0.21 | 0.21 |
| Expanded beads | Bulk density | | kg/m³ | 48 | 46 | 41 | 48 | 48 | 48 | 48 | 48 |
| | Moldable range | | MPa(G) | 0.32-0.36 | 0.34-0.36 | 0.36 | 0.32-0.36 | 0.32-0.36 | 0.32-0.36 | 0.32-0.36 | 0.32-0.36 |
| | Heat of fusion of high-temperature peak | | J/g | 17 | 18 | 20 | 17 | 17 | 17 | 17 | 17 |
| Molded article | Density | | kg/m³ | 60 | 60 | 60 | 60 | 60 | 60 | 60 | 60 |
| | 50% Compressive stress | | kPa | 465 | 420 | 405 | 460 | 460 | 450 | 450 | 450 |
| | Oxygen index | | % | 27 | 28 | 29 | 27 | 27 | 27 | 27 | 27 |
| | Result of UL94 horizontal burning test | | - | HF-1 | HF-1 | HF-1 | HF-1 | HF-1 | HF-1 | HF-1 | HF-1 |

### [Table 4]

**(Table 4)**

| | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Raw materials | Polypropylene-based resin | Mass ratio | Parts by mass | 96 | 96 | 96 | 96 | 96 | 96 | 96 | 80 |
| | Flame retardant masterbatch | Type | - | MB9 | MB10 | MB11 | MB12 | MB13 | MB14 | MB15 | MB16 |
| | | Mass ratio | Parts by mass | 4 | 4 | 4 | 4 | 4 | 4 | 4 | 20 |
| Resin particles | Inorganic phosphinate | Type | - | A1 | A1 | A1 | A1 | A1 | A1 | A1 | A1 |
| | | Blending amount (A) | Mass% | 1.1 | 1.1 | 1.1 | 1.1 | 1.1 | 1.1 | 1.1 | 5.5 |
| | Melamine-based flame retardant | Type | - | B1 | B1 | B1 | B1 | B1 | B1 | B1 | B1 |
| | | Blending amount (B) | Mass% | 0.3 | 0.3 | 0.3 | 0.3 | 0.3 | 0.3 | 0.3 | 1.6 |
| | First antioxidant | Type | - | None | C1 | None | None | C1 | C1 | C1 | C1 |
| | | Blending amount (C) | Mass% | 0 | 0.13 | 0 | 0 | 0.01 | 0.29 | 0.50 | 0.03 |
| | Second antioxidant | Type | - | None | None | D1 | D2 | D1 | D1 | D1 | D1 |
| | | Blending amount (D) | Mass% | 0 | 0 | 0.13 | 0.13 | 0.29 | 0.01 | 0.50 | 0.10 |
| | Fatty acid amide | Type | - | E1 | E1 | E1 | E1 | E1 | E1 | E1 | E1 |
| | | Blending amount (E) | - Mass% | 0.02 | 0.02 | 0.02 | 0.02 | 0.02 | 0.02 | 0.02 | 0.10 |
| | (A)+(B) | | | 1.4 | 1.4 | 1.4 | 1.4 | 1.4 | 1.4 | 1.4 | 7.1 |
| | (A)/(B) | | - | 3.4 | 3.4 | 3.4 | 3.4 | 3.4 | 3.4 | 3.4 | 3.4 |
| | (C)+(D) | | | 0 | 0.13 | 0.13 | 0.13 | 0.30 | 0.30 | 1.00 | 0.13 |
| | (D)/(C) | | - | - | 0 | - | - | 29.0 | 0.03 | 1.0 | 4.0 |
| | {(C)+(D)}/(A) | | - | 0 | 0.11 | 0.11 | 0.11 | 0.27 | 0.27 | 0.91 | 0.02 |
| | (E)/{(C)+(D)} | | - | - | 0.16 | 0.16 | 0.16 | 0.07 | 0.07 | 0.02 | 0.80 |
| | {(C)+(D)}/{(A)+(B)} | | - | 0 | 0.09 | 0.09 | 0.09 | 0.21 | 0.21 | 0.70 | 0.02 |
| Expanded beads | Bulk density | | kg/m³ | 48 | 48 | 48 | 48 | 48 | 48 | 48 | 56 |
| | Moldable range | | MPa(G) | 0.32-0.36 | 0.32-0.36 | 0.32-0.36 | 0.32-0.36 | 0.32-0.36 | 0.32-0.36 | 0.32-0.36 | None |
| | Heat of fusion of high-temperature peak | | J/g | 17 | 17 | 17 | 17 | 17 | 17 | 17 | 20 |
| Molded article | Density | | kg/m³ | 60 | 60 | 60 | 60 | 60 | 60 | 60 | - |
| | 50% Compressive stress | | kPa | 460 | 460 | 450 | 450 | 450 | 440 | 450 | - |
| | Oxygen index | | % | 25 | 26 | 25 | 27 | 27 | 25 | 26 | - |
| | Result of UL94 horizontal burning test | | - | HF-2 | HF-2 | HF-2 | HF-2 | HF-2 | HF-2 | HF-2 | - |

As shown in Table 3, the expanded beads of Examples 1 to 8 contain an inorganic phosphinate and a melamine-based flame retardant, and further contain two antioxidants including a first antioxidant and a second antioxidant. Therefore, in the expanded beads of Examples 1 to 8, the blending amounts of the inorganic phosphinic acid and the melamine-based flame retardant can be reduced while securing excellent flame retardancy. In addition, since the blending amounts of the inorganic phosphinic acid and the melamine-based flame retardant are reduced, the expanded beads of Examples 1 to 8 have excellent in-mold moldability.

Among them, the expanded beads of Example 1 and Examples 4 to 8 in which the blending amount (A) of the inorganic phosphinic acid and the blending amount (B) of the melamine-based flame retardant were smaller could further improve the in-mold moldability.

On the other hand, the expanded beads of Comparative Example 1 shown in Table 4 did not contain the first antioxidant and the second antioxidant, and thus had poor flame retardancy. In addition, since the expanded beads of Comparative Examples 2 to 4 did not contain either of the first antioxidant and the second antioxidant, the expanded beads could not allow the first antioxidant and the second antioxidant to act synergistically, and thus had poor flame retardancy.

In the expanded beads of Comparative Examples 5 and 6, the balance between the blending amount (C) of the first antioxidant and the blending amount (D) of the second antioxidant was inappropriate, and either one of the first antioxidant and the second antioxidant was excessively contained. Therefore, the expanded beads of these Comparative Examples could not allow the first antioxidant and the second antioxidant to act synergistically, and had poor flame retardancy.

In the expanded beads of Comparative Example 7, the total (C) + (D) of the blending amount (C) of the first antioxidant and the blending amount (D) of the second antioxidant is excessively large. Therefore, in the expanded beads of Comparative Example 7, the effectiveness of the inorganic phosphinate and the melamine-based flame retardant is reduced by the antioxidant, resulting in poor flame retardancy.

In the expanded beads of Comparative Example 8, the total (A) + (B) of the blending amount (A) of the inorganic phosphinate and the blending amount (B) of the melamine-based flame retardant is excessively large. Therefore, the expanded beads of Comparative Example 8 had poor in-mold moldability.

Although the aspects of the polypropylene-based resin expanded beads, the method for producing the same, and the molded article of polypropylene-based resin expanded beads according to the present invention have been described above based on Examples, specific aspects of the polypropylene-based resin expanded beads, the method for producing the same, and the molded article of polypropylene-based resin expanded beads according to the present invention are not limited to the aspects of Examples, and the configuration can be appropriately changed without impairing the spirit of the present invention.

## Claims

1. A polypropylene-based resin expanded bead comprising an inorganic phosphinate and a melamine-based flame retardant, wherein
a blending amount of the inorganic phosphinate in the expanded bead is 0.5 mass% or more;
a blending amount of the melamine-based flame retardant in the expanded bead is 0.05 mass% or more;
a sum of the blending amount of the inorganic phosphinate and the blending amount of the melamine-based flame retardant in the expanded bead is 5 mass% or less;
the expanded bead further contains a first antioxidant composed of a phenolic antioxidant and a second antioxidant composed of a phosphorus-based antioxidant and/or a sulfur-based antioxidant;
a sum of a blending amount of the first antioxidant and a blending amount of the second antioxidant in the expanded bead is 0.05 mass% or more and 0.6 mass% or less; and
a ratio of the blending amount of the second antioxidant to the blending amount of the first antioxidant in the expanded bead is 0.5 or more and 10 or less.

2. The polypropylene-based resin expanded bead according to claim 1, wherein the blending amount of the inorganic phosphinate in the expanded bead is 0.5 mass% or more and 1.5 mass% or less.

3. The polypropylene-based resin expanded bead according to claim 1 or 2, wherein a ratio of the blending amount of the inorganic phosphinate to the blending amount of the melamine-based flame retardant in the expanded bead is 0.05 or more and 10 or less.

4. The polypropylene-based resin expanded bead according to any one of claims 1 to 3, wherein a ratio of the sum of the blending amount of the first antioxidant and the blending amount of the second antioxidant to the blending amount of the inorganic phosphinate in the expanded bead is 0.05 or more and 0.5 or less.

5. The polypropylene-based resin expanded bead according to any one of claims 1 to 4, wherein the expanded beads have a bulk density of 20 kg/m³ or more and 90 kg/m³ or less.

6. A molded article of polypropylene-based resin expanded beads obtained by in-mold molding of the polypropylene-based resin expanded beads according to any one of claims 1 to 5.

7. A method for producing polypropylene-based resin expanded beads in which polypropylene-based resin expanded beads are obtained by foaming polypropylene-based resin particles, wherein
the resin particles contain an inorganic phosphinate, a melamine-based flame retardant, a first antioxidant composed of a phenolic antioxidant, and a second antioxidant composed of a phosphorus-based antioxidant and/or a sulfur-based antioxidant;
a blending amount of the inorganic phosphinate in the resin particles is 0.5 mass% or more;
a blending amount of the melamine-based flame retardant in the resin particles is 0.05 mass% or more;
a sum of the blending amount of the inorganic phosphinate and the blending amount of the melamine-based flame retardant in the resin particles is 5 mass% or less;
a sum of a blending amount of the first antioxidant and a blending amount of the second antioxidant in the resin particles is 0.05 mass% or more and 0.6 mass% or less; and
a ratio of the blending amount of the second antioxidant to the blending amount of the first antioxidant in the resin particles is 0.5 or more and 10 or less.
